## Europäisches Patentamt
## European Patent Office
## Office européen des brevets

(19)

(11) Veröffentlichungsnummer: **0 035 050**
**B1**

(12) **EUROPÄISCHE PATENTSCHRIFT**

(45) Veröffentlichungstag der Patentschrift: **13.06.84**

(21) Anmeldenummer: **80103258.2**

(22) Anmeldetag: **12.06.80**

(51) Int. Cl.³: **H 04 B 1/06, H 04 B 1/10, H 04 B 3/04, H 04 L 27/06**

(54) **Empfänger.**

(30) Priorität: **23.02.80 DE 3006801**

(43) Veröffentlichungstag der Anmeldung:
**09.09.81 Patentblatt 81/36**

(45) Bekanntmachung des Hinweises auf die Patenterteilung:
**13.06.84 Patentblatt 84/24**

(84) Benannte Vertragsstaaten:
**FR GB NL SE**

(56) Entgegenhaltungen:
**US - A - 3 746 997**
**US - A - 3 935 535**
**US - A - 3 947 768**
**FREQUENZ, 33. Jahrgang, Heft 5, 1979, Berlin, KARL-DIRK KAMMEYER u. HEINRICH SCHENK "Ein flexibles Experimentiersystem für die Datenübertragungs im Fernsprechbereich (Teil I)", Seiten 141-145**
**IEEE TRANSACTIONS ON COMMUNICATIONS, Vol. COM-25, No. 2, Feb. 1977, New York P.J. VAN GERWEN et al "Microprocessor Implementation of High Speed Data Modems", Seiten 238-250**

(73) Patentinhaber: **ANT Nachrichtentechnik GmbH**
**Gerberstrasse 33**
**D-7150 Backnang (DE)**

(72) Erfinder: **Göckler, Heinz, Dipl.-Ing.**
**Elbinger Strasse 52**
**D-7150 Backnang (DE)**
Erfinder: **Till, Reinhard, Dr.-Ing.**
**Lutherweg 39**
**D-7150 Backnang (DE)**
Erfinder: **Schenk, Heinrich, Dr.-Ing.**
**Becker-Gundal-Strasse 1**
**D-8000 München 71 (DE)**

(74) Vertreter: **Schickle, Gerhard, Dipl.-Ing. et al, ANT Nachrichtentechnik GmbH Patent- und Lizenzabteilung Gerberstrasse 33 D-7150 Backnang (DE)**

## Beschreibung

Die Erfindung betrifft einen Empfänger zur Synchrondemodulation von reellen, mittels Filter entstörten bzw. entzerrten Bandpaßsignalen, die mittels Hilbert-Filterpaar in analytische Signale umgewandelt werden, die mittels Phasendrehglied gedreht, schrittaktweise abgetastet und in einem Entscheider abgefragt werden.

Solche Empfänger sind bekannt, beispielsweise aus dem Aufsatz "A High Performance Digital QAM 9600/sec Modem" von Akashi et al aus NEC Research & Development Nr. 45, April 77, S. 38 ff., aus dem Aufsatz "Microprocessor Implementation of High-Speed Data Modems" von Gerwen u.a. aus IEEE Trans. on Communications, Vol. COM-25, No. 2, Febr. 77, S. 238 bis 250 und aus dem Aufsatz "Ein flexibles Experimentiersystem für die Datenübertragung im Fernsprechbereich" von Kammeyer und Schenk in Frequenz 33, 1979, No. 5, S. 141 bis 145 bzw. No. 6, S. 165 bis 172.

Datenempfänger, wie die beschriebenen, benutzen meist Quadraturamplitudenmodulation und sind vornehmlich mit zeitdiskreter oder digitaler Signalverarbeitung realisiert.

Bei all den Datenempfängern dieser Art sind die einzelnen Funktionen in getrennten Filteranordnungen realisiert, beispielsweise die Synchrondemodulation mit Phasentrennung in einem digitalen Hilbert-Filterpaar, die optimale Rauschunterdrückung in einem Matched-Filter und die Signalentzerrung in einem speziellen Entzerrerfilter. Bei schnell arbeitenden Datenübertragungsgeräten sind zur Erzielung einer kleinen Bitfehlerrate neben dem Hilbert-Filterpaar die genannten anderen Filter erforderlich, so daß ein relativ hoher Schaltungsaufwand auftritt.

Die Erfindung hat sich deshalb die Aufgabe gestellt, einen Empfänger der obigen Art anzugeben, der mit wesentlich weniger Schaltungsaufwand auskommt.

Diese Aufgabe wird mit den in dem Patentanspruch 1 angegebenen Mitteln gelöst.

Durch den erfindungsgemäßen Empfänger wird erreicht, daß der gesamte Schaltungsaufwand zur Realisierung der Filterfunktionen kleiner wird. Bei zeitdiskreter oder digitaler Ausführung der Filterfunktionen ist insbesondere von Vorteil, daß alle Filterbaugruppen mit dem niedrigen Schrittakt arbeiten können und zur Multiplikation nicht den hohen Abtasttakt benötigen.

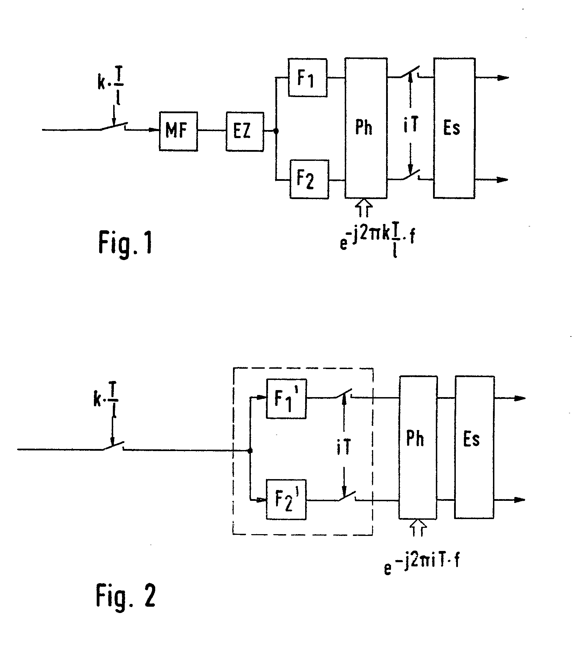

Es folgt die Beschreibung der Erfindung anhand der Figuren. Die Figur 1 zeigt ein Blockschaltbild bekannter QAM-Empfänger, bei denen das vom Kanal empfangene und im allgemeinen verrauschte und linear verzerrte Eingangssignal mit einer dem Abtasttheorem genügenden Abtastfrequenz abgetastet und zunächst einem Matched-Filter MF zur Rauschbegrenzung bzw. zur optimalen Rauschunterdrückung zugeführt wird. Anschliessend wird das Signal in einem Entzererfilter EZ entzerrt und einem Hilbert-Filterpaar F1, F2 zugeführt, in dem aus dem gemeinsamen reellen Eingangssignal ein komplexes Signal abgeleitet wird, das nur bei positiven Frequenzen Spektralanteile aufweist (analytisches Signal). Das erwünschte komplexe Datensignal erhält man genau dann, wenn sich der Phasengang der beiden Filter im interessierenden Frequenzbereich um $\pi/2$ unterscheidet und der Dämpfungsgang Allpaßcharakter aufweist. Anschließend erfolgt in dem Phasendrehglied Ph eine Phasendrehung um den Wert

$$2\pi \cdot k \cdot T/l \cdot f$$

wobei $T/l$ die Abtastperiode mit $l \in N \neq 0$, f die Trägerfrequenz, T die Schrittaktlänge und k die Anzahl der Abtastschritte sind. Nach der Phasendrehung erfolgen eine Abtastung im Schrittakt T und eine Abfrage im Entscheider Es, der an seinem Ausgang die demodulierten Datenpaare liefert.

Die Figur 2 zeigt die erfindungsgemäße Ausführung, wobei die Filterfunktionen MF, EZ, F1 bzw. F2 der Figur 1 zu einem einzigen Filterpaar F1' bzw. F2' zusammengefaßt sind. Die schrittaktweise Abtastung erfolgt vor der Phasendrehung und ist mit in den Filterblock einbezogen worden. Der Vorteil dieser Anordnung ist, daß der ganze Quadraturfilterblock mit dem Schrittakt T arbeiten kann, wodurch sich eine niedrigere Multiplikationsrate ergibt, währen die beiden Filter MF und EZ nach Figur 1 mit der höheren Abtast- und Multiplikationsrate l/T arbeiten müssen.

Durch die erfindungsgemäße Anordnung ergibt sich weiterhin der Vorteil, daß bei unterschiedlichen Verzerrungen, die beispielsweise von der gewählten Verbindung abhängen, sich die Übertragungsfunktion des Filterpaares einfach umschalten läßt, 50 daß ein optimaler Datenempfange ermöglicht wird.

## Patentansprüche

1. Empfänger zur Synchrondemodulation von reellen mittels Filter entstörten bzw. entzerrten Bandpaßsignalen, welche mittels Hilbert-Filterpaar in analytische Signale umgewandelt werden, die mittels Phasendrehglied (Ph) gedreht, schritttaktweise abgetastet und in einem Entscheider (Es) abgefragt werden, dadurch gekennzeichnet, daß die Funktionen Entzerrung und Umwandlung in einem einzigen Filterpaar (F1', F2') zusammengefaßt sind und daß das Filterpaar (F1', F2') schrittaktweise (iT) arbeitet, wobei die Abtastung vor der Phasendrehung erfolgt.

2. Empfänger nach Anspruch 1, dadurch gekennzeichnet, daß das Filterpaar (F1', F2') die Funktion Entstörung enthält.

3. Empfänger nach Anspruch 1 oder 2, dadurch gekennzeichnet, daß das Filterpaar (F1', F2') zeitdiskret oder digital ausgeführt ist.

**Revendications**

1. Récepteur pour la démodulation synchrone de signaux passe-bande réels déparasités respectivement corrigés pour supprimer les distorsions au moyen de filtres, qui sont convertis en signaux analytiques au moyen d'une paire de filtres de Hilbert, tournés au moyen d'un élément de rotation de phase (Ph), échantillonnés à la fréquence de pas et lus dans un décideur ou discriminateur (Es), caractérisé en ce que les fonctions correction de distorsion et conversion sont réunies en une seule paire de filtres (F1', F2') et en ce que la paire de filtres (F1', F2') travaille à la cadence de pas (iT), l'échantillonnage s'effectuant avant la rotation de phase.

2. Récepteur selon la revendication 1, caractérisé en ce que la paire de filtres (F1', F2') assure la fonction de déparasitage.

3. Récepteur selon la revendication 1 ou 2, caractérisé en ce que la paire de filtres (F1', F2') est en exécution à valeurs discrètes dans le temps ou numérique.

**Claims**

1. Receiver for the synchronous demodulation of real bandpass signals which have been cleared of interference or distortion by means of filters and are converted by means of a Hilbert filter pair into analytic signals which are rotated by means of a phase-rotating member (Ph), scanned in cyclic steps and interrogated in a decider, characterised thereby, that the functions of distortion clearance and conversion are combined in a single filter pair (F1', F2') and that filter pair (F1', F2') operates in cyclic steps, wherein the scanning takes place before the phase rotation.

2. Receiver according to claim 1, characterised thereby, that the filter pair (F1', F2') contains the function of clearance of interference.

3. Receiver according to claim 1 or 2, characterised thereby, that the filter pair (F1', F2') is constructed to be discreet in time or digital.

Fig. 1

Fig. 2

1